# EUROPEAN PATENT APPLICATION

(11) **EP 3 572 475 A1**
(43) Date of publication of application: **27.11.2019**
(21) Application number: 18742312.4
(22) Date of filing: 12.01.2018
(51) Int. Cl.: C09D 201/04, C09D 5/16, C09D 7/40, C09D 175/04, F21S 2/00, F21V 8/00, G02B 1/18, G02B 6/00

(54) **COATING COMPOSITION, OPTICAL MEMBER, AND ILLUMINATOR**

(30) Priority: 19.01.2017 JP 2017007259
(71) Applicant: Panasonic Intellectual Property Management Co., Ltd., Osaka-shi, Osaka 540-6207 (JP)
(72) Inventor: SHIGENO, Hiroki, Osaka-shi, Osaka 540-6207 (JP)
(74) Representative: Müller-Boré & Partner Patentanwälte PartG mbB
(86) International application number: PCT/JP2018/000593
(87) International publication number: WO 2018/135394

(57) **Abstract**

A coating composition contains: a fluororesin that imparts water repellency and includes a hydroxyl group; and a hydrophilic material that imparts hydrophilicity and includes a hydroxyl group. Moreover, the coating composition contains a bonding material that has a plurality of functional groups to be bonded to hydroxyl groups and bonds the fluororesin and the hydrophilic material to each other. An optical member 10 includes the coating film 2, which is obtained from the coating composition, on at least a part of a surface thereof. An illuminator 100 includes: a light-guiding plate 10A composed of the optical member; and a light source 20 that emits light to be made incident onto the light-guiding plate.

## Description

### TECHNICAL FIELD

The present invention relates to a coating composition, an optical member, and an illuminator. In detail, the present invention relates to a coating composition capable of imparting antifouling properties to both of oil and dust for a long period, to an optical member imparted with the antifouling properties by a coating film obtained from the coating composition, and to an illuminator using the optical member.

### BACKGROUND ART

Heretofore, there has been known a technology for imparting antifouling properties to an illumination cover for use in an illuminator in order to prevent an exterior appearance of the illuminator from being damaged and optical characteristics thereof from being degraded due to adhesion of dirt to the illumination cover. For example, it has been known to impart antistatic properties to an illumination cover in order to reduce the adhesion of dust and foreign objects. Moreover, it has been known to impart water repellency and oil repellency to the illumination cover in addition to the antistatic properties in order to reduce not only electrostatic dirt such as dust but also a hydrophilic stain and a hydrophobic stain such as oil.

Patent Literature 1 discloses an antifouling coating composition containing: an antistat composed of a salt of an anion and a cation; a fluororesin having a hydroxyl group; a silicone-modified acrylic resin having a hydroxyl group; and an organic solvent. Moreover, Patent Literature 1 also discloses an antifouling laminate in which there is formed a layer that has antifouling properties by being added with the antifouling coating composition and a crosslinking agent. The antifouling coating composition as described above contains the fluororesin having a hydroxyl group, thus making it possible to form a layer excellent in antifouling properties against such an oil stain. Furthermore, the coating composition contains the antistat composed of a salt of an anion and a cation, thus making it possible to make the layer also excellent in antifouling properties against the adhesion of dust.

### CITATION LIST

### PATENT LITERATURE

Patent Literature 1: International Publication No. WO 2009/084356

### SUMMARY OF INVENTION

In Patent Literature 1, the coating composition contains a salt of an anion and a cation in order to be imparted with the antistatic properties, and this salt does not have a bond with the fluororesin and the silicone-modified acrylic resin. Therefore, due to water and an environmental change, the salt is sometimes set free from the layer obtained from the antifouling coating composition, and in that case, the antistatic properties of the layer are degraded. Therefore, the layer obtained from the coating composition of Patent Literature 1 has had a problem that long-term continuity of the antifouling properties is insufficient.

The present invention has been made in consideration of such a problem as described above, which is inherent in the prior art. Then, it is an object of the present invention to provide a coating composition capable of maintaining antifouling properties of a coating film, which is obtained thereby, for a long period, an optical member including the coating film obtained by the coating composition, and an illuminator using the optical member.

In order to solve the above-described problem, a coating composition according to a first aspect of the present invention contains: a fluororesin that imparts water repellency and includes a hydroxyl group; and a hydrophilic material that imparts hydrophilicity and includes a hydroxyl group. Moreover, the coating composition contains a bonding material that has a plurality of functional groups to be bonded to hydroxyl groups and bonds the fluororesin and the hydrophilic material to each other.

An optical member according to a second aspect of the present invention includes a coating film, which is obtained from the above-mentioned coating composition, on at least a part of a surface thereof.

An illuminator according to a third aspect of the present invention includes: a light-guiding plate composed of the above-mentioned optical member; and a light source that emits light to be made incident onto the light-guiding plate.

### BRIEF DESCRIPTION OF DRAWINGS

[Fig. 1] Fig. 1 is a perspective view schematically illustrating an optical member according to this embodiment and a light source that emits light to be made incident onto the optical member.
[Fig. 2] Fig. 2 is a cross-sectional view schematically illustrating a pendant light to which the illuminator according to this embodiment is applied.
[Fig. 3] Fig. 3 is a plan view of the pendant light of Fig. 2 when viewed from below.
[Fig. 4] Fig. 4 is an enlarged view of a portion of reference symbol A in Fig. 2.

### DESCRIPTION OF EMBODIMENTS

A detailed description will be given below of a coating composition according to this embodiment, an optical member including a coating film to be obtained from the coating composition, and an illuminator using the optical member. Note that dimensional ratios in the drawings are exaggerated for convenience of explanation, and are sometimes different from actual ratios.

### [Coating composition]

The coating composition of this embodiment is applied to a substrate and is cured, whereby a coating film that keeps antifouling properties against oil and dust can be obtained. Then, the coating composition contains: a fluororesin for imparting water repellency to the coating film to be obtained; and a hydrophilic material for imparting hydrophilicity to the coating film.

The coating composition contains the fluororesin, thus making it possible to provide the coating film with high water repellency and oil repellency, a low adhesion, and removal easiness. Therefore, a water stain or an oil stain becomes difficult to adhere to the coating film, and even if the water or oil stain adheres thereto, it becomes possible to easily remove the water or oil stain. Moreover, the coating composition contains the hydrophilic material, thus making it possible to impart antistatic properties to the coating film. That is, for example, moisture in the atmosphere adheres to a surface of the coating film due to the hydrophilic material, whereby an electroconductive path for static electricity is formed on the surface of the coating film. In this way, the coating film is suppressed from being charged, and accordingly, it becomes possible to reduce adhesion of electrostatic dirt such as dust.

As the fluororesin contained in the coating composition, there is used one that imparts water repellency to the coating film and includes a hydroxyl group. As the fluororesin as described above, there can be used a fluororesin in which a hydroxyl group is added to at least either one of a main chain and a side chain. Moreover the fluororesin to be added with a hydroxyl group is not particularly limited; however, for example, there can be used at least one selected from the group consisting of polytetrafluoroethylene (PTFE), polychlorotrifluoroethylene (PCTFE), polyvinylidene fluoride (PVDF), polyvinyl fluoride (PVF), perfluoroalkoxy alkane (PFA), a tetrafluoroethylene-hexafluoropropylene copolymer (FEP), an ethylene-tetrafluoroethylene copolymer (ETFE), and an ethylene-chlorotrifluoroethylene copolymer (ECTFE). Note that, as hydroxyl group-containing fluororesins placed on the market, there are mentioned LUMIFLON (registered trademark) made by AGC Chemicals Company, CEFRAL COAT (registered trademark) made by Central Glass Co., Ltd., ZAFLON made by Toagosei Co., Ltd, ZEFFLE (registered trademark) made by Daikin Industries, Ltd., FLUONATE (registered trademark) made by DIC Corporation, Fclear (registered trademark) made by Kanto Denka Kogyo Co., Ltd., and the like.

As the hydrophilic material contained in the coating composition, there is used one that imparts hydrophilicity to the coating film and includes a hydroxyl group. As such a hydrophilic material as described above, at least either one of a polyethylene glycol derivative and silica (SiO₂) can be used. The polyethylene glycol derivative can impart hydrophilicity to the coating film since an ether group in a molecule thereof has an affinity with water. Silica can also impart hydrophilicity to the coating film since a siloxane bond (-Si-O-Si-) in a molecule thereof and a hydroxyl group on a surface thereof have an affinity with water. As the polyethylene glycol derivative, polyethylene glycol with a number average molecular weight of 200 to 20000 for example can be used. Moreover, as the silica, particulate silica microparticles can be used.

The coating composition of this embodiment contains a bonding material that bonds the above-mentioned fluororesin and hydrophilic material to each other. Specifically, the coating composition of this embodiment contains a bonding material that has a plurality of functional groups to be bonded to the hydroxyl group contained in the fluororesin and to the hydroxyl group contained in the hydrophilic material and bonds the fluororesin and the hydrophilic material to each other. The coating composition of this embodiment contains such a bonding material as described above, thus making it possible for the fluororesin and the hydrophilic material to be indirectly bonded to each other while interposing the bonding material therebetween in the obtained coating film. That is, after the coating composition is applied to a base material, the hydroxyl group of the fluororesin, the hydroxyl group of the hydrophilic material and the functional groups of the bonding material are reacted with one another, whereby a coating film in which the fluororesin and the hydrophilic material are bonded to each other while interposing the bonding material therebetween can be obtained. In this way, even if an environment around the coating film changes and moisture adheres to the coating film, the hydrophilic material becomes difficult to be eluted from the coating film. Therefore, it becomes possible to maintain the antistatic properties of the coating film for a long period, and to reduce the adhesion of the electrostatic dirt. Likewise, even if the environment around the coating film changes, the fluororesin becomes difficult to be eluted from the coating film. Therefore, it becomes possible to maintain the water repellency and oil repellency of the coating film for a long period, and to reduce the adhesion of the water stain and the oil stain.

As the bonding material, there can be used a material that has the plurality of functional groups to be bonded to hydroxyl groups and is capable of being bonded to the fluororesin and the hydrophilic material when the coating film is formed. As such a bonding material as described above, at least either one of alkoxysilane and a silanol compound can be used. The alkoxysilane generates a silanol group (Si-OH) by hydrolysis, and further, the silanol group is subjected to dehydration condensation with the hydroxyl groups of the fluororesin and the hydrophilic material. Therefore, the use of the alkoxysilane as the bonding material makes it possible to bond the fluororesin and the hydrophilic material to each other by a dehydration condensation reaction. Likewise, the silanol compound also has a silanol group, and accordingly, it becomes possible to bond the fluororesin and the hydrophilic material to each other by such a dehydration condensation reaction.

As the alkoxysilane that is a bonding material, it is preferable to use one having a plurality of alkoxy groups. As the alkoxysilane, for example, there can be used at least one selected from the group consisting of tetramethoxysilane, tetraethoxysilane, methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, dhexyltriethoxysilane, octyltriethoxysilane, decyltriethoxysilane, and 1,6-bis(trimethoxysilyl)hexane. Moreover, as the silanol compound, there can be used one in which the alkoxy groups in the above-mentioned alkoxysilane are partially subjected to hydrolysis to become silanol groups.

As the bonding material, an isocyanate compound including a plurality of isocyanate groups (-NCO) can be used. The isocyanate groups react with the hydroxyl groups, thereby forming a urethane bond (-NH-CO-O-). Therefore, the use of the isocyanate compound as the bonding material makes it possible to bond the fluororesin and the hydrophilic material to each other while interposing the urethane bond therebetween.

As the isocyanate compound having the plurality of isocyanate groups, there can be used at least one selected from the group consisting of aliphatic isocyanate, alicyclic isocyanate and aromatic isocyanate. As the aliphatic isocyanate, there are mentioned diisocyanates with carbon numbers of 6 to 10, such as 1,6-hexamethylene diisocyanate (HDI), 2,2,4-trimethylhexamethylene diisocyanate, and lysine diisocyanate. As the alicyclic isocyanate, there can be mentioned isophorone diisocyanate (IPDI), 4,4'-dicyclohexylmethane diisocyanate (hydrogenated MDI), 1,3-diisocyanate methylcyclohexane (hydrogenated XDI), 1,4-cyclohexane diisocyanate, norbornane diisocyanate (NBDI), and the like. Moreover, modified products of the hexamethylene diisocyanate and the isophorone diisocyanate, such as isocyanurates, biurets and adducts thereof can also be mentioned. As the aromatic isocyanate, there can be mentioned tolylene diisocyanate (TDI), phenylene diisocyanate, 4,4'-diphenylmethane diisocyanate (MDI), 1,5-naphthalene diisocyanate, xylylene diisocyanate (XDI), carbodiimide-modified MDI, and the like.

As mentioned above, the bonding material is bonded to the hydroxyl group contained in the fluororesin and to the hydroxyl group contained in the hydrophilic material, and can thereby bond the fluororesin and the hydrophilic material to each other. However, the bonding material may react with hydroxyl groups of the adjacent fluororesins, and may bond the fluororesins to each other. Likewise, the bonding material may react with hydroxyl groups of the adjacent hydrophilic materials, and may bond the hydrophilic materials to each other. Even in this case, it becomes possible to reduce the adhesion of the electrostatic dirt such as dust and the adhesion of the water stain and the oil stain since the fluororesin and the hydrophilic material become difficult to be eluted from the obtained coating film.

In the coating composition of this embodiment, it is preferable that the hydrophilic material be silica microparticles, and that the bonding material be at least either one of the silanol compound and the alkoxysilane. The fluororesin includes a hydroxyl group, and further, the silica microparticles which are the hydrophilic material also have a hydroxyl group on surfaces thereof, and accordingly, these materials have high compatibility. Therefore, these can be substantially uniformly mixed with each other in the coating composition, and as a result, make it possible to increase transparency and smoothness of the obtained coating film. Moreover, the silanol compound and the alkoxysilane are strongly bonded to the fluororesin and the silica microparticles by the dehydration condensation, and accordingly, it becomes possible to easily obtain a hard and transparent coating film.

When the hydrophilic material is the silica microparticles, it is preferable that an average particle size of the silica microparticles be 1 nm to 100 nm. In this case, the silica microparticles and the fluororesin are microscopically composited with each other, and accordingly, scattering of visible light that transmits through the coating film is reduced, thus making it possible to further increase transparency of the coating film. Note that the average particle size (median diameter, D50) of the silica microparticles can be measured by a dynamic light scattering method.

In the coating composition, the silanol compound and/or the alkoxysilane which is the bonding material may be present in a state of being bonded to surfaces of the silica microparticles which are the hydrophilic material. That is, it is not necessary that the silica microparticles and the silanol compound and/or the alkoxysilane be dispersed in the coating composition in a state of being separated from each other, and these materials may be dispersed in the coating composition in a state of being bonded to each other in advance. The silica microparticles in which the silanol compound and/or the alkoxysilane is boned to the surfaces is used, whereby it becomes possible to increase reactivity thereof with the fluororesin having a hydroxyl group, and to form the coating film more efficiently.

In the coating composition of this embodiment, it is preferable that the hydrophilic material be the polyethylene glycol derivative, and that the bonding material be the isocyanate compound. The fluororesin includes a hydroxyl group, and further, the polyethylene glycol derivative that is the hydrophilic material also includes a hydroxyl group, and accordingly, these materials have high compatibility. Therefore, these can be substantially uniformly mixed with each other in the coating composition, and as a result, make it possible to increase transparency and smoothness of the obtained coating film. Moreover, the isocyanate compound is strongly bonded to the fluororesin and the polyethylene glycol derivative by the urethane bond, and accordingly, it becomes possible to easily obtain a hard and transparent coating film.

In the coating composition, it is preferable that an average molecular weight of the polyethylene glycol derivative be 200 to 600. The polyethylene glycol derivative in which the average molecular weight is within the above-described range has high reactivity with the bonding material, and accordingly, it becomes possible to further increase the hardness and hydrophilicity of the coating film. Note that a number average molecular weight (Mn) can be used as the average molecular weight of the polyethylene glycol derivative, and for example, can be obtained from a hydroxyl value.

Next, a description will be given of a method for producing the coating composition of this embodiment. The coating composition can be prepared by mixing the fluororesin, the hydrophilic material and the bonding material, which are mentioned above, with one another. Conditions for the mixing are not particularly limited, and the mixing can be performed at room temperature in the atmosphere. Moreover, an order of mixing the fluororesin, the hydrophilic material and the bonding material is not particularly limited, either.

At the time of mixing the fluororesin, the hydrophilic material and the bonding material with one another, viscosity of the coating composition may be adjusted by adding a solvent thereto in order to make it easy to apply the coating composition. As the solvent for adjusting the viscosity, it is preferable to use water or an organic solvent for example. The organic solvent is not particularly limited; however, it is preferable to appropriately select one that easily volatilizes during creation of the coating film and does not inhibit curing of the coating film during formation thereof. As the organic solvent, for example, there can be mentioned aromatic hydrocarbons (toluene, xylene and the like), alcohols (methanol, ethanol, isopropyl alcohol and the like), and ketones (acetone, methyl ethyl ketone, methyl isobutyl ketone, cyclohexanone and the like). Moreover, there are mentioned aliphatic hydrocarbons (hexane, heptane and the like), ethers (tetrahydrofuran and the like), amide-based solvents (N,N-dimethylformamide (DMF), dimethylacetamide (DMAc) and the like), methyl acetate, and butyl acetate. These organic solvents may be used singly or in combination of two or more types thereof.

Note that, as mentioned above, in the case of using the silica microparticles in which the silanol compound and/or the alkoxysilane is bonded to the surfaces, the coating composition is obtained by mixing the silica microparticles to which the silanol compound is bonded and the fluororesin with each other. Therefore, it becomes possible to simplify a production process.

As described above, the coating composition according to this embodiment contains: a fluororesin that imparts water repellency and includes a hydroxyl group; and a hydrophilic material that imparts hydrophilicity and includes a hydroxyl group. Moreover, the coating composition contains a bonding material that has a plurality of functional groups to be bonded to hydroxyl groups and bonds the fluororesin and the hydrophilic material to each other. In this way, in a coating film obtained from the coating composition, the fluororesin and the hydrophilic material can be indirectly bonded to each other while interposing the bonding material therebetween. Therefore, the hydrophilic material becomes difficult to be eluted from the coating film, and accordingly, it becomes possible to maintain the antistatic properties of the coating film for a long period, and to reduce the adhesion of electrostatic dirt. Likewise, the fluororesin becomes difficult to be eluted from the coating film, and accordingly, it becomes possible to maintain the water repellency and oil repellency of the coating film for a long period, and to reduce the adhesion of water stain and oil stain.

Note that, in order to form an electroconductive path of static electricity in the obtained coating film, the coating composition of this embodiment is added with a hydrophilic material. Therefore, it is preferable that the coating composition should not contain metal particles or metal oxide particles that forms the electroconductive path. By the fact that the coating composition does not contain the metal particles or the metal oxide particles, scattering and absorption of transmitted light are suppressed in the obtained coating film, and accordingly, it becomes possible to further increase the transparency of the coating film.

Moreover, it is preferable that the coating composition of this embodiment should not contain particles which impart light diffusibility, either. By the fact that the coating composition does not contain the particles as described above, the scattering of transmitted light is suppressed in the obtained coating film, and accordingly, it becomes possible to further increase the transparency of the coating film. As the particles which impart light diffusibility, particles with an average particle size of approximately 1 µm to 1 mm can be mentioned. As such particles as described above, for example, there are benzoguanamine-based resin particles, styrene-based microparticles, melamine resin particles, polytetrafluoroethylene particles, barium sulfate particles, calcium carbonate particles, and the like.

### [Optical member]

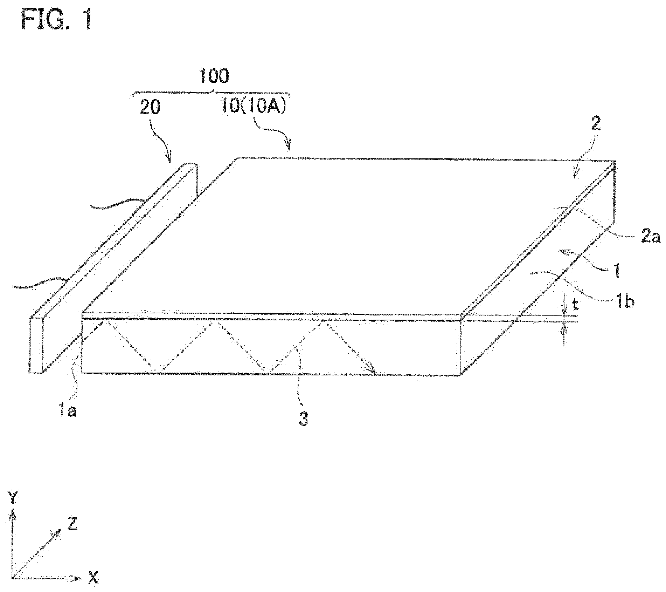

Next, the optical member according to this embodiment will be described in detail with reference to the drawings. As illustrated in Fig. 1, an optical member 10 according to this embodiment includes: a substrate 1; and a coating film 2 provided on at least one surface of the substrate 1 and obtained from the above-mentioned coating composition.

The substrate 1 is not particularly limited; however, it is preferable that the substrate 1 have translucency to the visible light with a wavelength range of 380 nm to 780 nm. Such a highly translucent substrate 1 as described above is used for the optical member 10, whereby the optical member 10 becomes transparent when the optical member 10 is used for an illuminator 100, and the illuminator 100 can be formed to be provided with a design with a sense of space.

The substrate 1 is not particularly limited as long as it has translucency to the visible light. As the substrate 1, for example, there can be used at least one selected from the group consisting of an acrylic resin (a polymer of acrylic acid ester or methacrylic acid ester), a polycarbonate resin, a styrene resin, an epoxy resin, and glass. Particularly, the acrylic resin and the polycarbonate resin have high light transmittance. Therefore, it is preferable that the substrate 1 be formed of at least either one of the acrylic resin and the polycarbonate resin. Note that, preferably, total light transmittance of the visible light in the substrate 1 is 90 to 100%, and the total light transmittance can be measured by using a spectral haze meter.

A thickness of the substrate 1 is not particularly limited; however, preferably, is 0.1 mm to 10 mm for example. When a strength and translucency of the substrate 1 are taken into consideration, more preferably, the thickness of the substrate 1 is 1 mm to 5 mm. Note that, as the substrate 1, there can be used one obtained by a sheet molding method such as glass casting, continuous casting and an extrusion method.

The optical member 10 of this embodiment includes the coating film 2 on at least one surface of the substrate 1. The coating film 2 is formed in such a manner that the above-mentioned coating composition is cured, where the fluororesin and the hydrophilic material are bonded to each other while interposing the bonding material therebetween. In this way, it becomes possible to reduce the adhesion of the electrostatic dirt such as dust and the adhesion of the water stain and the oil stain since the fluororesin and the hydrophilic material become difficult to be eluted from the coating film 2.

A thickness t of the coating film 2 is not particularly limited; however, preferably, is 0.1 µm to 100 µm, particularly preferably, 0.5 µm to 10 µm. The fact that the thickness t of the coating film 2 is within this range makes it possible to obtain such a coating film 2 that has a high hardness while having antifouling properties.

A use of the optical member 10 of this embodiment is not particularly limited; however, it is preferable to use the optical member 10 as a light-guiding plate 10A for example. As mentioned above, it is preferable that the substrate 1 have translucency to the visible light, and further, the coating film 2 also has translucency to the visible light, and accordingly, the optical member 10 can be suitably used as the light-guiding plate 10A.

Herein, Fig. 1 illustrates an example where the optical member 10 is used as the light-guiding plate 10A. As illustrated in Fig. 1, when a light source 20 is installed so as to face one end surface 1a of the light-guiding plate 10A, visible light emitted from the light source 20 enters an inside of the substrate 1 through the one end surface 1a. Such visible light 3 thus entered reflects on a main surface of the substrate 1, and repeats this reflection, thereby propagating toward other end surface 1b located opposite to the one end surface 1a. At this time, a part of the propagating light can be emitted from the main surface of the substrate 1 toward a Y-axis direction and an opposite direction to the Y-axis direction. Therefore, when the light source 20 is turning on, the visible light is emitted from the whole of the light-guiding plate 10A as a single plate, and accordingly, it becomes possible to increase design property of the whole of the light-guiding plate. Moreover, as mentioned above, the substrate 1 and the coating film 2 have translucency to the visible light, and accordingly, transparency thereof is high when the light source 20 is turned off. Therefore, when the light source 20 is turned off, then a design intrinsic to the light-guiding plate, where the light-guiding plate is transparent and provided with a sense of space, can be obtained.

Next, a description will be given of a method for manufacturing the optical member 10 of this embodiment. First, the above-mentioned coating composition is applied to the surface of the substrate 1. At this time, a method of applying the coating composition is not particularly limited. As a method of applying the coating composition to the main surface of the substrate 1, a coating method or a printing method can be used. In the coating method, the coating composition can be applied by using an air spray, a brush, a bar coater, a Meyer bar, an air knife or the like. Moreover, in the printing method, there can be used a method such as gravure printing, reverse gravure printing, offset printing, flexography, and screen printing.

Next, in the coating composition applied to the substrate 1, the hydroxyl group contained in the fluororesin and the hydroxyl group contained in the hydrophilic material are reacted with the functional groups contained in the bonding material, and the fluororesin and the hydrophilic material are bonded to the bonding material. Reaction conditions for these are not particularly limited, and heating treatment may be performed according to needs. For example, when the bonding material is composed of the silanol compound, the dehydration condensation reaction proceeds even at room temperature, and accordingly, the coating composition just needs to be left standing until being cured. Moreover, when the bonding material is the isocyanate compound, it is preferable that the coating composition be subjected to heating treatment, and for example, be heated at 50 to 100°C. In this way, the optical member 10, in which the coating film 2 is formed on the surface of the substrate 1, can be obtained.

Note that, in Fig. 1, the coating film 2 is formed on only one of main surfaces of the substrate 1; however, the optical member 10 is not limited to such a mode, and for example, the coating film 2 may be formed on both of the main surfaces of the substrate 1. Moreover, the coating film 2 may be formed on the one end surface 1a and other end surface 1b of the substrate 1.

As described above, the optical member 10 of this embodiment includes the coating film 2, which is obtained from the coating composition, on at least a part of the surface thereof. In this way, it becomes possible to obtain the optical member including the coating film that has long-term continuity, has an antifouling function to both of the oil stain and dirt dust, and further, does not affect the optical characteristics. Note that, in the same way to the above-mentioned coating composition, from a viewpoint of increasing the transparency of the coating film 2, it is preferable that the coating film 2 should not contain the metal particles and the metal oxide particles for forming the electroconductive path, and it is also preferable that the coating film 2 should not contain the particles which impart the light diffusibility.

The optical member of this embodiment is not limited to the above-mentioned light-guiding plate, and for example, may be used as an illumination cover that covers a light source such as a light emitting diode (LED) and diffuses light from the light source. In this case, as the substrate of the optical member, a resin plate in which a light diffusing agent is dispersed can be used in order to impart sufficient light diffusibility.

### [Illuminator]

Next, the illuminator according to this embodiment will be described in detail with reference to the drawings. The illuminator 100 of this embodiment includes: the light-guiding plate 10A composed of the above-mentioned optical member 10; and the light source 20 that emits light to be made incident onto the light-guiding plate 10A.

As illustrated in Fig. 1, the light source 20 is not particularly limited as long as it can cause visible light to enter the inside of the substrate 1 through the one end surface 1a of the substrate 1. As the light source 20, for example, a point light source such as a light emitting diode (LED) and a linear light source such as a fluorescent lamp can be used.

As illustrated in Fig. 1, the light source 20 faces the one end surface 1a of the light-guiding plate 10A, and the visible light emitted from the light source 20 enters the inside of the substrate 1 through the one end surface 1a. Therefore, in the illuminator 100 of this embodiment, it is preferable that the light source 20 be located at an end portion of the light-guiding plate 10A. Moreover, when the light-guiding plate 10A has a planar shape, the light source 20 is provided on the one end surface 1a of the light-guiding plate 10A, whereby light is emitted from the main surface of the light-guiding plate 10A to the Y-axis direction and the opposite direction to the Y-axis direction. As a result, it becomes possible to radiate light efficiently while saving a space for the illuminator.

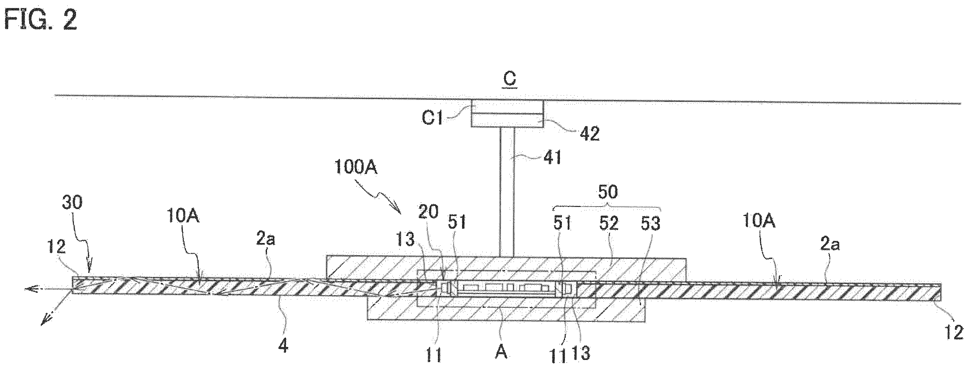

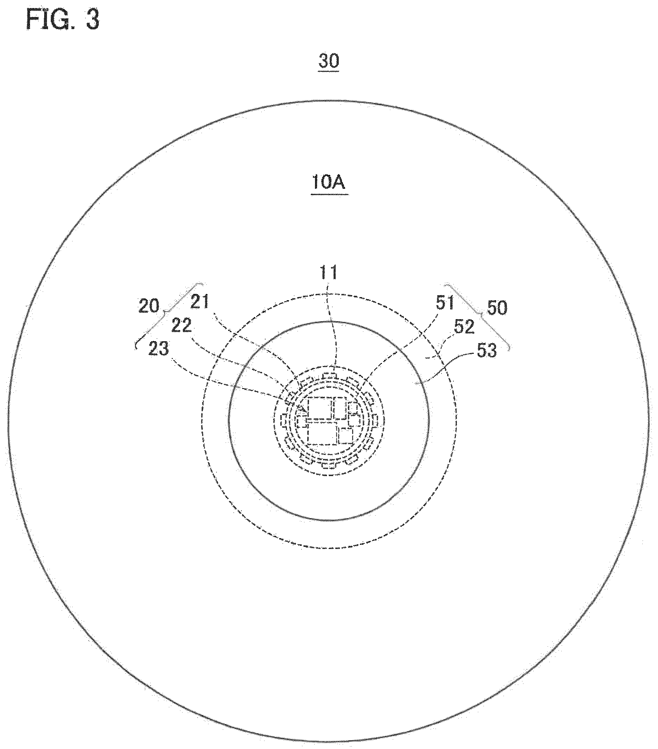

Fig. 2 to Fig. 4 illustrate an application example of the illuminator 100, and illustrate an example where the illuminator 100 is applied to a pendant light to be used by being suspended from a ceiling. As illustrated in Fig. 2, an illuminator 100A includes: a device body 30; and a power supply line 41 that is drawn out from the device body 30 and serves for supplying power to the device body 30. Moreover, the illuminator 100A includes a connector 42 that is attached to an end portion of the power supply line 41 and engaged with a hanging ceiling C1 provided on a ceiling C. The device body 30 includes: the light source 20; the light-guiding plate 10A that guides light emitted from the light source 20 and emits the light to the outside; and a housing 50 that holds the light source 20 and the light-guiding plate 10A.

As illustrated in Fig. 2, the housing 50 includes: a light source holding portion 51 that holds the light source 20; a first light-guiding plate holding portion 52 that is disposed on the light source holding portion 51 and holds the light-guiding plate 10A; and a second light-guiding plate holding portion 53 that is disposed under the light source holding portion 51 and holds the light-guiding plate 10A. The light source holding portion 51 is formed into a cylindrical shape, and is disposed so that a cylindrical axis thereof coincides with the vertical direction. The first light-guiding plate holding portion 52 and the second light-guiding plate holding portion 53 are individually formed into disc shapes, and are disposed so that centers thereof intersect the cylindrical axis of the light source holding portion 51. The housing 50 is formed of a material that is lightweight and excellent in heat dissipation and light reflectivity, for example, is formed of a white polybutylene terephthalate resin.

The light-guiding plate 10A is formed into a disc shape larger than the first light-guiding plate holding portion 52 and the second light-guiding plate holding portion 53. Then, in a state where a center of the light-guiding plate 10A intersects the cylindrical axis of the light source holding portion 51, the light-guiding plate 10A is sandwiched between the first light-guiding plate holding portion 52 and the second light-guiding plate holding portion 53. The light-guiding plate 10A is disposed so as to be opposite to the ceiling C, and is exposed to the outside. The light-guiding plate 10A has a circular opening 11 in a center thereof, and in the opening 11, the light source holding portion 51 that holds the light source 20 is disposed.

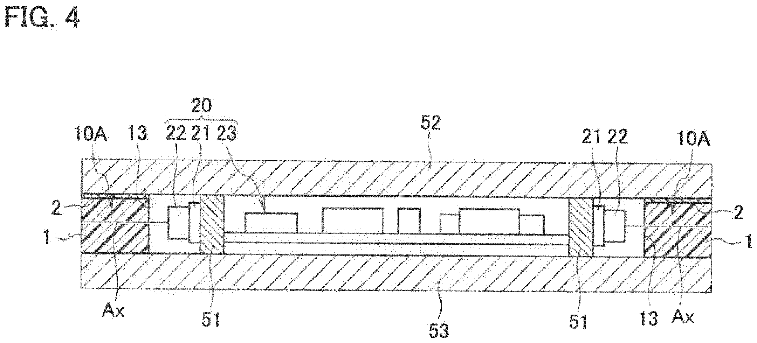

As illustrated in Fig. 4, the light source 20 includes: a wiring board 21 attached around an outer circumferential surface of the light source holding portion 51; a plurality of LEDs 22 mounted on a wiring board 21 at predetermined intervals; and a lighting circuit 23 that controls lighting of the LEDs 22. The wiring board 21 is composed of a flexible circuit board, and is attached to the light source holding portion 51 while interposing therebetween an insulating sheet excellent in thermal conductivity and electrical insulating properties. The plurality of LEDs 22 is arranged so that an optical axis Ax of each thereof becomes perpendicular to the wiring board 21, and are opposed to an inner end surface 13 of the light-guiding plate 10A. The LEDs 22 are composed, for example, of white LEDs which emit white light. The lighting circuit 23 is housed inside the light source holding portion 51, and is electrically connected to the respective LEDs 22 while interposing therebetween power distribution lines and a wiring pattern provided on the wiring board 21.

Light emitted from each of the LEDs 22 enters the light-guiding plate 10A from the inner end surface 13 as illustrated by a dashed arrow in Fig. 2. The light that has thus entered is reflected by a front surface 4 and the back surface 2a, and is thereby guided inside the light-guiding plate 10A to a direction of an outer end surface 12. Then, the light thus guided is emitted to the outside from the outer end surface 12 of the light-guiding plate 10A.

Then, in the illuminator 100A, visible light is emitted from the outer end surface 12 of the light-guiding plate 10A when the light source 20 is turning on, and accordingly, it becomes possible to make the illuminator 100A as a pendant light that has excellent design property. Moreover, the light-guiding plate 10A becomes transparent when the light source 20 is not turning on, and accordingly, the light-guiding plate 10A can be provided with a design with a sense of space. That is, as illustrated in Fig. 2, there is a gap between the light-guiding plate 10A and the ceiling C, and accordingly, it becomes possible to perform space rendering with a sense of space.

### EXAMPLES

Hereinafter, this embodiment will be described more in detail by examples and Comparative Examples; however, this embodiment is not limited to these examples.

### [Example 1]

In this example, as the fluororesin having a hydroxyl group, Fclear (registered trademark) KD270R made by Kanto Denka Kogyo Co., Ltd. was used. As the hydrophilic material having a hydroxyl group, there was used polyethylene glycol with an average molecular weight of approximately 400, which was made by Wako Pure Chemical Industries, Ltd. As the bonding material, isophorone diisocyanate made by Tokyo Chemical Industry Co., Ltd. was used.

First, 100 mass parts of the polyethylene glycol were mixed with the fluororesin with 100 mass parts of a solid content. Next, in order that a total amount by mole of the hydroxyl group of the fluororesin and the hydroxyl group of the polyethylene glycol can be identical to an amount of mole of the isocyanate groups, an equivalent amount of isophorone diisocyanate was added. Then, this mixture was diluted with a mixed solvent of methyl ethyl ketone and cyclohexanone so that a solid content of this mixture became 10 mass%, whereby a coating composition was obtained.

After this coating composition was applied to a substrate, the coating composition was heated at 80°C for 20 minutes, whereby the hydroxyl group of the fluororesin and the hydroxyl group of the polyethylene glycol were reacted with the isocyanate groups of the isophorone diisocyanate. In this way, an optical member of this example, which included a coating film, was obtained. Note that a film thickness of the obtained coating film was 1 µm. Moreover, as the substrate, there was used an acrylic plate that was formed of an acrylic resin and had dimensions of 50 mm long, 70 mm wide and 2 mm thick.

### [Example 2]

An optical member of this example was obtained in the same way to Example 1 except for using polyethylene glycol with an average molecular weight of approximately 200, which was made by Wako Pure Chemical Industries, Ltd., as the hydrophilic material having a hydroxyl group.

### [Example 3]

An optical member of this example was obtained in the same way to Example 1 except for using polyethylene glycol with an average molecular weight of approximately 600, which was made by Wako Pure Chemical Industries, Ltd., as the hydrophilic material having a hydroxyl group.

### [Example 4]

In this example, as the fluororesin having a hydroxyl group, Fclear KD270R made by Kanto Denka Kogyo Co., Ltd. was used. As the hydrophilic material having a hydroxyl group and the bonding material, Excel Pure BD-P01 made by Central Automotive Products Ltd. was used. Note that Excel Pure BD-P01 is a compound in which silica microparticles as the hydrophilic material and a silanol compound as the bonding material are mixed with each other, where an average particle size of the silica microparticle is 10 nm to 100 nm.

Then, Excel Pure BD-P01 was mixed with a fluororesin with a solid content of 100 mass parts so that a solid content thereof becomes 900 mass parts, whereby a coating composition was obtained.

This coating composition was applied to the same substrate as that in Example 1, and was left standing at room temperature for 20 minutes, whereby the hydroxyl group of the fluororesin and the hydroxyl groups of the silica microparticles and the silanol compound were subjected to dehydration condensation. In this way, the optical member of this example, which included a coating film, was obtained. Note that a film thickness of the obtained coating film was 0.3 µm.

### [Comparative Example 1]

An optical member of this example was obtained in the same way to Example 1 except for using LR2634 as an acrylic polyol resin, which was made by Mitsubishi Rayon Co., Ltd, in place of Fclear KD270R as the fluororesin having a hydroxyl group. Note that this acrylic polyol resin is a resin that does not impart water repellency though includes a hydroxyl group.

### [Comparative Example 2]

An optical member of this example was obtained in the same way to Example 1 except for using Fclear MD1700 made by Kanto Denka Kogyo Co., Ltd. in place of Fclear KD270R as the fluororesin having a hydroxyl group. Note that, since Fclear MD1700 does not have a hydroxyl group though is a fluororesin that imparts water repellency, Fclear MD1700 is a resin that cannot be bonded to the bonding material.

### [Comparative Example 3]

An optical member of this example was obtained in the same way to Example 1 except for using LR2634 as an acrylic polyol resin, which was made by Mitsubishi Rayon Co., Ltd, in place of the polyethylene glycol as the hydrophilic material having a hydroxyl group. Note that this acrylic polyol resin is a resin that does not impart hydrophilicity though includes a hydroxyl group.

### [Comparative Example 4]

An optical member of this example was obtained in the same way to Example 4 except for using LR2634 as an acrylic polyol resin, which was made by Mitsubishi Rayon Co., Ltd, in place of Fclear KD270R as the fluororesin having a hydroxyl group. Note that this acrylic polyol resin is a resin that does not impart water repellency though includes a hydroxyl group.

### [Comparative Example 5]

An optical member of this example was obtained in the same way to Example 4 except for using Fclear MD 1700 made by Kanto Denka Kogyo Co., Ltd. in place of Fclear KD270R as the fluororesin having a hydroxyl group. Note that, since Fclear MD1700 does not have a hydroxyl group though is a fluororesin that imparts water repellency, Fclear MD1700 is a resin that cannot be bonded to the bonding material.

Note that, as a result of visually observing the optical members of Examples 1 to 4 and Comparative Examples 1, 3 and 4, it was confirmed that each thereof was a uniform coating film that was substantially colorless and transparent. Moreover, as a result of touching, by the finger, the coating films in the optical members of Examples 1 to 4 and Comparative Examples 1, 3 and 4, it was confirmed that the coating films were cured films.

However, as a result of visually observing the optical members of Comparative Examples 2 and 5, it was confirmed that each thereof was a non-transparent and non-uniform coating film. That is, in each of Comparative Examples 2 and 5, compatibility of Fclear MD1700 as the fluororesin that does not have a hydroxyl group was poor, so that a coating composition in a suspended state was formed, and accordingly, the obtained coating film became non-uniform.

### [Evaluation]

For the optical members of Examples 1 to 4 and Comparative Examples 1, 3 and 4, in each of which a uniform coating film was obtained, an oil adhesion test to evaluate water repellency/oil repellency and a dust adhesion test to evaluate antistatic properties were conducted.

### (Oil adhesion test (water repellency/oil repellency))

On each of the coating films of Examples 1 to 4 and Comparative Examples 1, 3 and 4, 2 µL of oleic acid was dropped, and thereafter, a static contact angle thereof in five seconds was measured. Note that the static contact angle was measured by using a contact angle meter (CA-W150 made by Kyowa Interface Science, Inc.). Measurement results are shown in Table 1. Note that, from a viewpoint of easiness to remove oil stain, with regard to a contact angle of oleic acid, 40° or more was evaluated as "good", and less than 40° was evaluated as "defective".

As shown in Table 1, in each of the optical members of Examples 1 to 4, such an oleic acid contact angle thereof was 40° or more, and accordingly, oil wettability is low. Therefore, it is seen that the optical members of Examples 1 to 4 are excellent in antifouling properties against oil, and further, even if an oil stain adheres thereto, the oil stain can be removed therefrom with ease. In contrast, in each of the optical members of Comparative Examples 1 and 4, which did not contain the fluororesin imparting water repellency, the water repellency/oil repellency thereof decreased, and accordingly, an oleic acid contact angle thereof became less than 40°. Therefore, it is seen that these optical members are poor in antifouling properties against oil, and further, even if an oil stain adheres thereto, the oil stain cannot be removed therefrom with ease.

### (Dust adhesion test (antistatic property test))

For the coating films of Examples 1 to 4 and Comparative Examples 1, 3 and 4, surface resistance values thereof were measured. Specifically, at an applied voltage of 100 V, the surface resistance values were measured by using a surface resistance measuring device (Hiresta (registered trademark) Type IP MCP-HT260) made by Mitsubishi Chemical Analytech Co., Ltd. These surface resistance values are values based on Japanese Industrial Standard (JIS K6911-1995).

With regard to a surface resistivity, less than 1×10¹⁴ Ω/sq was evaluated as "good", and 1×10¹⁴ Ω/sq or more was evaluated as "defective" from a viewpoint of easiness to remove dust dirt.

As shown in Table 1, in each of the optical members of Examples 1 to 4, a surface resistivity thereof was less than 1×10¹⁴ Ω/sq. Therefore, it is seen that the optical members of Examples 1 to 4 are excellent in antifouling properties against dust, and further, even if dirt dust adheres thereto, the dirt dust can be removed therefrom with ease.

In contrast, in the optical member of Comparative Example 3, which did not contain the hydrophilic material imparting hydrophilicity, the surface resistivity thereof became 1×10¹⁴ Ω/sq or more since hydrophilicity thereof decreased. Therefore, it is seen that the optical member is poor in antifouling properties against dust, and further, even if dust dirt adheres thereto, the dust dirt cannot be removed therefrom with ease.

**[Table 1]**

| | Contact angle of oleic acid (°) | Surface resistivity (Ω/sq) |
|---|---|---|
| Example 1 | 66.1 | 2×10¹² |
| Example 2 | 59.3 | 5×10¹³ |
| Example 3 | 75.1 | 1×10¹³ |
| Example 4 | 42.7 | 3×10¹¹ |
| Comparative example 1 | 26.8 | 4×10⁹ |
| Comparative example 2 | so poor in compatibility that uniform coating film could not be obtained | |
| Comparative example 3 | 50.9 | > 1×10¹⁴ |
| Comparative example 4 | 10.6 | 2×10¹⁰ |
| Comparative example 5 | so poor in compatibility that uniform coating film could not be obtained | |

From Examples 1 to 4 described above, it is seen that, in accordance with this embodiment, there can be easily obtained a coating film, which has low oil adhesion and low dust adhesion, and further, is hard and transparent.

Although the contents of this embodiment have been described above in accordance with the Examples, it is obvious to those skilled in the art that this embodiment is not limited to the description of these and that various modifications and improvements are possible.

The entire contents of Japanese Patent Application No. 2017-007259 (filed on: January 19, 2017) are incorporated herein by reference.

### INDUSTRIAL APPLICABILITY

In accordance with the present invention, it becomes possible to obtain a coating composition capable of maintaining antifouling properties of a coating film, which is obtained thereby, for a long period, an optical member including the coating film obtained by the coating composition, and an illuminator using the optical member.

### REFERENCE SIGNS LIST

- 2: Coating film
- 10: Optical member
- 10A: Light-guiding plate
- 20: Light source
- 100, 100A: Illuminator

## Claims

1. A coating composition comprising:
a fluororesin that imparts water repellency and includes a hydroxyl group;
a hydrophilic material that imparts hydrophilicity and includes a hydroxyl group; and
a bonding material that has a plurality of functional groups to be bonded to hydroxyl groups and bonds the fluororesin and the hydrophilic material to each other.

2. The coating composition according to claim 1, wherein the hydrophilic material is silica microparticles, and the bonding material is at least either one of a silanol compound and alkoxysilane.

3. The coating composition according to claim 2, wherein an average particle size of the silica microparticle is 1 nm to 100 nm.

4. The coating composition according to claim 1, wherein the hydrophilic material is a polyethylene glycol derivative, and the bonding material is an isocyanate compound.

5. The coating composition according to claim 4, wherein an average molecular weight of the polyethylene glycol derivative is 200 to 600.

6. An optical member comprising a coating film obtained from the coating composition according to any one of claims 1 to 5 on at least a part of a surface of the optical member.

7. An illuminator comprising:
a light-guiding plate composed of the optical member according to claim 6; and
a light source that emits light to be made incident onto the light-guiding plate.
